# EUROPEAN PATENT APPLICATION

(11) **EP 3 989 308 A1**
(43) Date of publication of application: **27.04.2022**
(21) Application number: 20202751.2
(22) Date of filing: 20.10.2020
(51) Int. Cl.: H01M 4/04, H01M 4/13, H01M 4/139, H01M 4/62

(54) **METHOD OF MANUFACTURING AN ELECTRODE FOR ALL SOLID STATE BATTERY**

(71) Applicant: ARKEMA INC., King of Prussia PA 19406 (US)
(72) Inventor: FUKUYAMA, Takehiro, TOKYO, Tokyo (JP)
(74) Representative: Arkema Patent

(57) **Abstract**

The invention relates to a method of preparation of an electrode slurry for all solid-state battery. Another subject matter of the invention is a process for making an electrode for all solid-state battery. The invention also concerns the solid-state lithium-ion batteries manufactured by incorporating said electrode.

## Description

### FIELD OF THE INVENTION

The present invention relates generally to the field of electrical energy storage in the lithium storage batteries of Li-ion type. More specifically, the invention relates to a method of preparation of an electrode slurry for all solid-state battery. Another subject matter of the invention is a process for making an electrode for all solid-state battery. The invention also concerns the solid-state lithium-ion batteries manufactured by incorporating said electrode.

### TECHNICAL BACKGROUND

An elementary cell of a Li-ion storage battery or lithium battery comprises an anode (at discharge), and a cathode (likewise at discharge) generally made of a lithium insertion compound of metal oxide type, such as LiMn₂O₄, LiCoO₂ or LiNiO₂, between which is inserted an electrolyte which conducts lithium ions.

All solid-state batteries are known to have improved safety, compared to current batteries that use liquid as electrolyte. All solid-state batteries comprise two solid electrodes and a solid electrolyte layer, which also acts as separator in between the electrodes. These electrodes and solid electrolyte layers can be prepared as slurries, in liquid form, comprising active materials, binders, and solid electrolytes either dispersed or dissolved. For example, as in JP 5721494, electrodes can be obtained by mixing binder, solid electrolyte and active materials in nitrile solvent to prepare a slurry, cast the slurry on current collectors, and finally drying the slurry.

Poly(vinylidene fluoride) (PVDF) is the most commonly used binder in lithium-ion batteries because of its excellent electrochemical stability, good bonding capability and high adhesion to electrode materials and current collectors. PVDF can only be dissolved in certain organic solvents such as N-Methyl pyrrolidone (NMP), which is volatile, flammable, explosive, and highly toxic, leading to serious environment concern. However, polar solvents are not indicated in the case of all solid-state batteries, as they may cause degradation of solid electrolytes by moisture absorption.

For this reason, non-polar solvents are preferred to prepare slurries, but they do not dissolve fluoropolymers, such as PVDF homopolymer. In order to solve this issue, in the related art, a copolymer of vinylidene fluoride with another monomer, or a terpolymer of VDF, are used as binders to adjust the solubility of the binder in a solvent.

US 9799921 teaches the manufacture of a negative electrode for a solid-state battery, wherein the binder is a copolymer consisting of a vinylidene fluoride (VDF) monomer unit and a hexafluoropropylene (HFP) monomer unit, and butyl butyrate is used as a solvent.

US 2015/096169 teaches a positive electrode comprising, as a binder, a terpolymer made of vinylidene fluoride/tetrafluoroethylene/hexafluoropropylene =55%/ 25%/ 20% by mol, dissolved in butyl butyrate to solve the issue.

However, the solvents that can dissolve such VDF-based copolymers and terpolymers are not completely non-polar, they still absorb moisture to an extent where solid electrolyte degradation happens and decrease cell capacity. In addition, these solvents have high boiling points, which require high energy to evaporate. Also, such PVDF copolymers and terpolymers tend to have a low melting point, because of very little crystallinity and do not perform well at high temperatures such as 100°C.

Thus, there still exists a need to develop a method to stably disperse fluoropolymers, notably PVDF-based resins not limited to copolymers and terpolymers of PVDF, into non-polar solvents, and use this mixture as a binder to prepare slurries and finally electrodes for solid-state batteries. This allows the use of solvents with properties such as lower boiling point and lower moisture absorption, than the above-cited solvents.

The all solid-state battery incorporating this electrode shows higher capacity at charge/discharge under room temperature, and gives higher charge capacity at 100°C compared to solid-state batteries using electrodes prepared from known methods.

### SUMMARY OF THE INVENTION

It is a first object of the invention to provide a method for manufacturing an electrode slurry for all solid-state battery, said method comprising the steps of:
i) preparing a mixture comprising: a dispersing agent, a non-polar solvent, and a binder, said binder comprising one or more fluoropolymers, and perform a high shear treatment, to obtain a binder dispersion,
ii) adding: an electrode active material, a sulfide-type solid electrolyte and optionally a conductive agent, to said binder dispersion, and perform a mixing step to obtain an electrode slurry,
the proportion of dispersing agent being of less than 1%, preferably less than 0.5% by weight, with respect to the electrode slurry.

In some embodiments, said non-polar solvent is chosen among aromatic or aliphatic solvents having less than 1 g/L of solubility in water.

In some embodiments, said fluoropolymer is chosen from: homopolymers and copolymers of vinylidene fluoride containing at least 50% by weight of VDF, the comonomer being chosen from chlorotrifluoroethylene, hexafluoropropylene, trifluoroethylene, vinyl fluoride, perfluoro methyl vinylether, perfluoro ethyl vinylether and tetrafluoroethylene.

In some embodiments, said electrode is a positive electrode.

In some embodiments, said electrode is a negative electrode.

In some embodiments, said dispersing agent has either polyurethane or polyester functionality.

Another subject matter of the invention is a method for making an electrode, said process comprising applying the electrode slurry prepared according to the invention, onto a substrate.

Another subject matter of the invention is a solid-state lithium-ion battery comprising a positive electrode, a negative electrode and a solid electrolyte layer, wherein at least one electrode is manufactured using the process according to invention.

The present invention addresses the need expressed in the prior art. In particular, the invention provides a method for making battery electrodes for sulfide solid electrolyte based lithium ion secondary battery. The electrode preparation method described in this invention allows usage of solvents other than butyl butyrate in combination with polyvinylidene fluoride (PVDF) as binder. In addition, the batteries comprising electrodes prepared by the method according to the invention show higher initial charge/discharge capacity and charge capacity at 100°C, than batteries using electrodes prepared with the conventional method.

The method described in the invention can also be used to prepare the electrolyte layer for sulfide solid electrolyte based lithium ion secondary battery.

### DETAILED DESCRIPTION OF THE INVENTION

The invention will now be described in more detail in the following description.

The invention relates first to a method for stably dispersing fluoropolymers, such as PVDF powder, into non-polar solvents.

This method allows the manufacturing of an electrode slurry for all solid-state battery, said method comprising the steps of:
i) preparing a mixture comprising: a dispersing agent, a non-polar solvent, and a binder, said binder comprising one or more fluoropolymers, and perform a high shear treatment, to obtain a binder dispersion,
ii) adding: an electrode active material, a sulfide-type solid electrolyte and optionally a conductive agent, to said binder dispersion, and perform a mixing step to obtain an electrode slurry,
the proportion of dispersing agent being of less than 1%, preferably less than 0.5% by weight, with respect to the electrode slurry.

According to one embodiment, said mixture in step i) consists of a dispersing agent, a non-polar solvent, and a binder, said binder comprising one or more fluoropolymers.

### Components of the Slurry

The slurry used to prepare electrodes according to the invention comprises the following components: active material, sulfide type solid electrolyte, binder, solvents, and dispersion agents. The slurry may additionally contain conductive agents if necessary.

The active materials in the electrode slurry are materials that are capable of storing and releasing lithium ions.

Some examples of the positive electrode active material are LiCoO₂, Li(Ni,Co,AI)O₂, Li₍₁₊ₓ₎, NiaMnbCoc (x represents a real number of 0 or more, a=0.8, 0.6, 0.5, or 1/3, b=0.1, 0.2, 0.3, or 1/3, c=0.1, 0.2, 0.2, or 1/3), LiNiO₂, LiMn₂O₄, LiCoMnO₄, Li₃NiMn₃O₃, Li3Fe2(PO4)3, Li3V2(PO4)3, a different element-substituted Li Mn spinel having a composition represented by Li₁₊ₓMn_{2-x-y}M_{y}O₄ (wherein M represents at least one metal selected from Al, Mg, Co, Fe, Ni, and Zn, x and y independently representing a real number between 0 to 2), lithium titanate (LiₓTiO_{y} - x and y independently representing a real number between 0 to 2), and a lithium metal phosphate having a composition represented by LiMPO₄ (M represents Fe, Mn, Co, or Ni). Among these, Ni_{0.8}Mn_{0.1}Co_{0.1}, is preferably used as the positive electrode active material.

In addition, the surface of each of the above-described materials may be coated. The coating material is not particularly limited as long as it has lithium ion conductivity and contains a material capable of being maintained in the form of a coating layer on the surface of the active material. Examples of the coating material include LiNbO₃, Li₄Ti₅O₁₂, and Li₃PO₄.

The shape of the positive electrode active material is not particularly limited but is preferably particulate.

Some examples of the negative electrode active material are lithium alloy, a metal oxide, a carbon material such as graphite or hard carbon, silicon, a silicon alloy, and Li₄TiO₁₂. Graphite is preferable.

The shape of the negative electrode active material is not particularly limited but is preferably particulate.

The solvents in the electrode slurry of this invention are non-polar solvents.

In some embodiments, these non-polar solvents have less than 1 g/L of solubility in water. Some examples are aromatic or alkanes such as toluene, xylene, and decane. If solubility in water is higher than 1 g/L, moisture will be absorbed from air during slurry handling and degrade other components in the slurry.

The sulfide type solid electrolyte in the electrode slurry are glass or glass-ceramic like solid electrolyte having a sulfide as a main composition. Specific examples of the sulfide type solid electrolytes are Li₂S-P₂S₅, Li₂S-P₂S₃, Li₂S-P₂S₃-P₂S₅, Li2S-SiS2, LiI-Li₂S-SiS₂, LiI-Li₂S-P₂S₅, LiI-Li₂S-P₂O₅, LiI-Li₃PO₄-P, ₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄ and Li_{3.25}P_{0.25}Ge0_{.76}S₄.

The binder in the electrode slurry comprises one or more fluoropolymers.

The term "fluoropolymer" means a polymer formed by the polymerization of at least one fluoromonomer, and it is inclusive of homopolymers, copolymers, terpolymers and higher polymers that are thermoplastic in their nature, meaning they are capable of being formed into useful pieces by flowing upon the application of heat, such as is done in molding and extrusion processes. The fluoropolymer in certain embodiments of the invention contains at least 50 mole percent of one or more fluoromonomers, in polymerized form.

Fluoromonomers useful in the practice of the invention include, for example, vinylidene fluoride, tetrafluoroethylene (TFE), trifluoroethylene, chlorotrifluoroethylene (CTFE), hexafluoropropene (HFP), vinyl fluoride, hexafluoroisobutylene, perfluorobutylethylene (PFBE), pentafluoropropene, 3,3,3-trifluoro-1-propene, 2,3,3,3-tetrafluoropropene, fluorinated vinyl ethers, fluorinated allyl ethers, fluorinated dioxoles, and combinations thereof.

Especially preferred copolymers made by the process of the invention are copolymers of VDF with HFP, TFE or CTFE, comprising from about 50 to about 99 weight percent VDF, more preferably from about 70 to about 99 weight percent VDF.

The term "PVDF" employed here comprises vinylidene fluoride (VDF) homopolymers or copolymers of VDF and of at least one other comonomer in which the VDF represents at least 50 % by weight, the comonomer being chosen from chlorotrifluoroethylene, hexafluoropropylene, trifluoroethylene, vinyl fluoride, perfluoro methyl vinylether, perfluoro ethyl vinylether and tetrafluoroethylene.

Preferably, the fluoropolymer is polyvinylidene fluoride homopolymer and/or a copolymer of vinylidene fluoride with hexafluoropropylene in which the level of HFP is less or equal to 30% by weight.

The fluoropolymer is primarily produced via heterogeneous polymerization reactions, including suspension, emulsion and microemulsion systems. Generally, each of these reactions requires at least one monomer and a radical initiator in a suitable reaction medium. In addition, emulsion polymerizations of halogen-containing monomers generally require a surfactant capable of emulsifying both the reactants and the reaction products for the duration of the polymerization reaction.

In some variants, a process similar to that disclosed in document US 8,697,822 may be used. In short, a polymerization reaction is carried out by charging a reactor with water (preferably deionized water), at least one non-fluorinated surfactant, at least one monomer, preferably at least one fluoromonomer, and optionally, a chain-transfer agent and an antifoulant. Air may be purged from the reactor prior to the introduction of the fluoromonomer. Water is added to the reactor before bringing the reactor to the desired starting temperature, but the other materials may be added before or after bringing the reactor to temperature. At least one radical initiator is added to start and maintain the polymerization reaction. Additional monomer may be optionally added to replenish monomer that is consumed, and the other materials may be optionally added during the course of the polymerization to maintain the reaction and control the final product properties.

Upon completion of the polymerization reaction, the reactor is brought to ambient temperature and the residual unreacted monomer is vented to atmospheric pressure. The aqueous reaction medium containing the fluoropolymer is then recovered from the reactor as a latex. The latex consists of a stable mixture of the reaction components, i.e., water, surfactant, initiator (and/or decomposition products of the initiator) and fluoropolymer solids. The latex may contain from about 10 to about 50 weight percent polymer solids, preferably from 20 to 40% by weight. The polymer in the latex is in the form of small particles having a size range of from about 30 nm to about 500 nm.

Following polymerization, the polymer is agitated, thickened and dried.

In the process according to the invention, the fluoropolymer is used in powder form.

Advantageously, the method for manufacturing an electrode slurry for all solid-state battery is not limited to copolymers and terpolymers of PVDF, but is also applicable to PVDF homopolymers.

The conductive agents in the electrode slurry comprise of one or more material that can improve conductivity in a target positive electrode for a sulfide-based solid-state battery. Some examples include carbon blacks such as acetylene black, Ketjen black and the like; carbon fibers such as carbon nanotube, carbon nanofiber, vapor growth carbon fiber and the like; metal powders such as SUS powder, and aluminum powder.

The electrode slurry of this invention comprises a dispersion agent. Preferably, dispersants have either polyurethane or polyester functionality in their structure. Some examples of the dispersion agent are LPN22980 (BYK), Disperbyk^{®}-2008 (BYK), and Disperbyk^{®}-2155 (BYK). The content of the dispersing agent is, when a volume of an entire slurry is set to 100% by mass, preferably 1 % by mass or less, more preferably 0.5 % by mass or less.

The mixing ratios of the active material, sulfide solid electrolyte, and binder are not limiting, as long as the electrode obtained from the slurry functions.

The mass ratio between active materials and solid electrolytes is preferably, but not limited, between from 1:9 to 9:1 by weight, more preferably from 2:8 to 8:2.

The mass ratio of conductive agents with respect to the active material is preferably from 0.1 to 10 by %, more preferably from 0.5 to 7 %.

The mass ratio of binder with respect to the active material is preferably from 0.1 to 10 %, more preferably from 0.5 to 7 %.

The ratio of the solid content to the amount of the solvent can range from 30 % by mass to 80 % by mass.

### Preparation of the slurry

When preparing an electrode slurry according to the invention, these components are mixed with each other according to steps i) and ii) described above.

It is difficult to dissolve the binder used in the invention in non-polar solvents with less than 1 g/L solubility in water. The inventors found out that by addition of these binders to solvents mixed with dispersion agents, the binder can be dispersed in a short period of time, under high shear, even immediately after mixing the respective components.

Advantageously, the method for preparing an electrode slurry includes a step of adding the binder to the mixture of dispersing agent and non-polar solvent, then applying high shear, thus allowing the binder to be highly dispersed in the solvent.

According to one embodiment, said high shear treatment in step i) is performed for a duration of 10 min at most, at room temperature and atmospheric pressure, to obtain the binder dispersion. Preferably, said high shear treatment is performed for a duration comprised between 5 and 7 minutes.

According to one embodiment, the components can be successively added in step ii), with a mixing step between each addition.

According to one embodiment, the components added in step ii) are all mixed at once.

The mixing operation in step ii) is performed according to conventional methods.

In some embodiments, the electrode slurry is prepared using the following process:
- the dispersion agent is added to the solvent at less than 1.0%, preferably less than 0.5 % by weight, relative to the weight of the entire slurry;
- the binder is added to the mixture of solvent and dispersion agent;
- a high shear treatment (using for example Filmix at 40 m/s for 5 min.) is performed;
- either one of active material or the sulfide solid electrolyte is added to the binder dispersion;
- a mixing treatment (using for example a planetary centrifugal mixer such as Thinky mixer) is performed;
- the other component (among active material and the sulfide solid electrolyte) is added to the dispersion;
- a mixing treatment (using for example a planetary centrifugal mixer such as Thinky mixer) is performed;
- optionally, conductive agents can be added to the dispersion;
- a mixing treatment (using for example a planetary centrifugal mixer such as Thinky mixer) is performed.

As a result, "an electrode slurry" in which the electrode active material, sulfide solid electrolyte, optionally conductive agents, and the binders well dispersed in the solvent, can be easily obtained.

The high shear treatment allows the binder to be homogeneously dispersed in the non-polar solvent due to the dispersing agent. Examples of mixers performing this treatment are dissolvers, homomixers, sand mill, attritor, ball mill, vibration mill, high speed impeller mill, ultrasonic homogenizer, shaker, and thin film spin system mixer (Filmix).

Another subject matter of the invention is a method for making an electrode, said process comprising applying the electrode slurry prepared according to the invention, onto a substrate. Some examples of substrate are current collectors such as metal foil and metal mesh, polymer films, or solid electrolyte layer of a solid-state battery. The application can be done by well-known methods such as spray coating, gravure printing, or a method using a doctor blade.

The applied electrode slurry is then dried to form an electrode for solid-state battery. The drying method can be conventional methods known in the industry such as natural drying or baking under heat. The preferred thickness of an electrode is from 0.1 µm to 1000 µm, preferably from 0.1 µm to 300 µm.

The heat treatment consists in baking the metal collector coated with the slurry at a temperature comprised between 60 and 150°C for a duration comprised between 0.2 to 60 minutes.

Another subject matter of the invention is a Li-ion battery comprising a positive electrode, a negative electrode and a solid electrolyte layer, wherein at least one electrode is manufactured using the process described above.

A solid state battery is prepared by laminating the electrode (either positive or negative) manufactured using the methods described above with a solid electrolyte layer containing a solid electrolyte and an electrode of the opposite pole which also can be manufactured using the methods described above. It is preferably that the solid electrolyte layer and electrode of the opposite pole also contain the above described sulfide solid electrolyte and binder.

The solid electrolyte layer can also be prepared using the same method according to the invention. Another method is by mixing the solid electrolyte and binder as a dry mix without solvents then press-forming the mixture by, for example, hot pressing. Another method is by just press-forming solid electrolyte by, for example, hot pressing.

The invention can be used to prepare electrodes for batteries that require high safety and capacity such as electric vehicle (EV). Battery producers may use the methods defined above to prepare solid-state battery to be used as energy storage in EV, residential buildings, and consumer electronics.

The method described in the invention can also be used to prepare lithium ion battery cathodes where NMP is difficult to use, due to binder gelation coming from moisture absorption and increase in pH. Non-polar low moisture absorbing solvents can be used instead of NMP to prevent moisture absorption and pH increase, providing slurries with higher anti-gelation properties.

### EXAMPLES

The following example illustrates the invention without limiting it.

1.13 g of LPN22980 (dispersing agent, BYK Chemie) was added to 17.32 g of toluene (Nacalai Tesque). 11.55 g of polyvinylidene fluoride powder (Kynar 301F, Arkema) was added to the solution and mixed without resting the solution in high shear mixer (Filmix, Primix) at 40 m/s for 300 sec. to obtain a binder dispersion. To the binder dispersion, LiNi_{0.8}Mn_{0.1}Co_{0.1}O₂ as active material, Li₁₀GeP₂S₁₂ as solid electrolyte, and SuperP (Imerys) as conductive agent were added, so the ratio of the materials are active material/solid electrolyte/conductive agent/binder=60/34/3/3 wt%. Toluene was added to adjust the solid content to 54 wt% by weight. The blend was mixed by Thinky Mixer AR-100 (Thinky) to obtain a homogeneous slurry after each addition. The obtained slurry was cast on Al sheet by a desktop coater and dried under vacuum at room temeprature over 8 hours to obtain a cathode sheet.

The cathode was punched out at 1 mmcp size and stacked with other components of the solid state battery in the following order: Cathode/solid electrolyte (Li₁₀GeP₂S₁₂)/In foil/Li foil/SUS foil. The stacked components were pressed at 20 kN for 5 min to prepare a half cell solid state battery.

The battery was charged and discharged at 25°C for one cycle and charged again at 100°C to measure the capacity. Results are shown in Table 1.

### Comparative example

Into an 80-gallon stainless steel reactor was charged, 345 lbs of deionized water, 90 g non-ionic surfactant and 0.2 lbs of potassium acetate. Following evacuation, agitation was begun at 23 rpm, the reactor was heated. After reactor temperature reached the desired set point of 100°C, the VDF and HFP monomer were introduced to reactor with HFP ratio of 62 wt % of total monomers. Reactor pressure was then raised to 650 psi by charging approximately 35 lbs total monomers into the reactor. After reactor pressure was stabilized, 1.0 lbs of initiator solution made of 1.0 wt % potassium persulfate and 1.0 wt % sodium acetate were added to the reactor to initiate polymerization. Upon initiation, the ratio of HFP to VDF was so adjusted to arrive at 33% HFP to total monomers in the feed. The rate of further addition of the initiator solution was also adjusted to obtain and maintain a final combined VDF and HFP polymerization rate of roughly 100 pounds per hour. The VDF and HFP copolymerization was continued until approximately 160 pounds monomers were introduced in the reaction mass. The HFP feed was stopped but VDF feed continued till approximately 180 lbs of total monomers were fed to the reactor. The VDF feed was stopped and the batch was allowed to react-out at the reaction temperature to consume residual monomer at decreasing pressure. After 40 minutes, the initiator feed and agitation were stopped and the reactor was cooled, vented and the latex recovered. Solids in the recovered latex were determined by gravimetric technique and were about 32% weight and melt viscosity of about 38 kp according to ASTM method D-3835 measured at 450F and 100 s⁻¹. The melting temperature of resin was measured in accordance with ASTMD3418 and was found to be not detectable during the second heat and there was no detectable heat of fusion. The weight average particle size was measured by NICOMP laser light scattering instrument and was found to be about 220 nm.

The resin was dissolved in butyl butyrate at 12 wt% solid to obtain a binder solution. The same method as in the example according to the invention was applied to this binder solution to obtain a half cell solid state battery. The obtained battery was charged and discharged at 25°C for one cycle and charged again at 100°C to measure the capacity. Results are shown in Table 1.

**Table 1**

| | 25°C charge capacity (mAh/g) | 25°C discharge capacity (mAh/g) | 100°C charge capacity (mAh/g) |
|---|---|---|---|
| Example | 107 | 40 | 253 |
| Comparative example | 96 | 33 | 221 |

The cells produced by the process according to the invention provide higher charge and discharge capacity at 25°C. The charge capacity is higher at 100°C also, showing that more electricity can be charged at both low and high temperatures when utilizing electrodes of this invention.

## Claims

1. A method for preparing an electrode slurry for all solid state battery, said method comprising the steps of:
i) preparing a mixture comprising: a dispersing agent, a non-polar solvent, and a binder, said binder comprising one or more fluoropolymers, and perform a high shear treatment, to obtain a binder dispersion,
ii) adding: an electrode active material, a sulfide-type solid electrolyte and optionally a conductive agent, to said binder dispersion, and perform a mixing step to obtain an electrode slurry,
the proportion of dispersing agent being of less than 1%, preferably less than 0.5% by weight, with respect to the electrode slurry.

2. The method according to claim 1, wherein said fluoropolymer is chosen from: homopolymers and copolymers of vinylidene fluoride containing at least 50% by weight of VDF, the comonomer being chosen from chlorotrifluoroethylene, hexafluoropropylene, trifluoroethylene, vinyl fluoride, perfluoro methyl vinylether, perfluoro ethyl vinylether and tetrafluoroethylene.

3. The method according to one of claims 1 or 2, wherein the fluoropolymer is polyvinylidene fluoride (PVDF) homopolymer or a copolymer of vinylidene fluoride with hexafluoropropylene.

4. The method according to one of claims 1 to 3, wherein said non-polar solvent is chosen among aromatic or aliphatic solvents having less than 1 g/L of solubility in water, such as toluene, xylene, and decane.

5. The method according to one of claims 1 to 4, wherein said electrode active material is selected, for a positive electrode, from: LiCoO₂, Li(Ni,Co,AI)O₂, Li₍₁₊ₓ₎, NiaMnbCoc where x represents a real number of 0 or more, a is 0.8, 0.6, 0.5, or 1/3, b is 0.1, 0.2, 0.3, or 1/3, c is 0.1, 0.2, 0.2, or 1/3, LiNiO₂, LiMn₂O₄, LiCoMnO₄, Li₃NiMn₃O₃, Li₃Fe₂(PO₄)₃, Li₃V₂(PO₄)₃, a different element-substituted Li Mn spinel having a composition represented by Li₁₊ₓMn_{2-x-y}M_{y}O₄ wherein M represents at least one metal selected from Al, Mg, Co, Fe, Ni, and Zn, lithium titanate, and LiMPO₄ where M represents Fe, Mn, Co, or Ni.

6. The method according to one of claims 1 to 4, wherein said electrode active material is selected, for a negative electrode, from: lithium alloy, a metal oxide, a carbon material such as graphite or hard carbon, silicon, a silicon alloy, and Li₄TiO₁₂.

7. The method according to one of claims 1 to 6, wherein said sulfide-type solid electrolyte is selected from: Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P, ₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, and Li_{3.25}P_{0.25}Ge0_{.76}S₄.

8. The method according to one of claims 1 to 7, wherein said dispersant has either polyurethane or polyester functionality.

9. The method according to one of the preceding claims, wherein the ratio of the solid content of the electrode slurry to the amount of the solvent ranges from 30 % to 80 % by mass.

10. A process for making an electrode, said process comprising applying an electrode slurry onto a substrate, wherein said electrode slurry is prepared according to anyone of claims 1 to 9.

11. The process of claim 10, wherein said substrate is a current collector selected from metal foil, metal mesh, polymer film, or solid electrolyte layer.

12. The process according to one of claims 10 or 11, wherein the electrode slurry is applied to said substrate by spray coating, gravure printing, or a method using a doctor blade.

13. The process according to any of claims 10 to 12, further comprising drying said electrode slurry to obtain an electrode for solid-state battery.

14. A solid-state lithium-ion battery comprising a positive electrode, a negative electrode and a solid electrolyte layer, wherein at least one electrode is manufactured using the process according to anyone of claims 10 to 13.

15. The battery according to claim 14, wherein said solid electrolyte layer is prepared using the method according to anyone of claims 1 to 9.
